Europäisches Patentamt

European Patent Office

Office européen des brevets

(19)

(11) Veröffentlichungsnummer: **0 355 250**
**A1**

## EUROPÄISCHE PATENTANMELDUNG

(21) Anmeldenummer: **89102649.4**

(22) Anmeldetag: **16.02.89**

(51) Int. Cl.⁴: **A01G 9/10 , A01G 31/00**

(30) Priorität: **20.08.88 DE 3828346**

(43) Veröffentlichungstag der Anmeldung:
**28.02.90 Patentblatt 90/09**

(84) Benannte Vertragsstaaten:
**AT BE CH DE ES FR GB GR IT LI LU NL**

(71) Anmelder: **KLASMANN WERKE GMBH**
**Georg-Klasmann-Strasse 2-10**
**D-4478 Geeste 4(DE)**

(72) Erfinder: **Der Erfinder hat auf seine Nennung verzichtet**

(74) Vertreter: **Herrmann-Trentepohl, Werner,**
**Dipl.-Ing. et al**
**Postfach 1140 Schaeferstrasse 18**
**D-4690 Herne 1(DE)**

(54) Formkörper für die Pflanzenaufzucht und Pflanzenkultur und Verfahren zu seiner Herstellung.

(57) Bei einem Formkörper (5) für die Pflanzenanzucht und Pflanzenkultur aus einem wassersaugenden Substrat, welches offene Poren für die Pflanzendurchwurzelung aufweist, ist erfindungsgemäß vorgesehen, daß das Substrat Schalen (1) des Reiskornes aufweist, die mit einer die Schalen (1) wenigstens teilweise umhüllenden polymeren, organischen, jedoch im wesentlichen inerten Substanz (16-18) verkittet sind.

Fig. 1

EP 0 355 250 A1

Die Erfindung betrifft Formkörper für die Pflanzenaufzucht und Pflanzenkultur und Verfahren zur Herstellung dieser Formkörper gemäß dem Oberbegriff des Anspruches 1.

Formkörper für die Pflanzenaufzucht und Pflanzenkultur sind erfindungsmäß in verschiedenen Ausführungsformen herstellbar. Vorzugsweise bildet das Substrat sogenannte Anbauplatten, deren Abmessungen systembedingt gewählt werden und z. B. für die Kultur von mehreren in einer Reihe angeordneten Pflanzen dienen. Außerdem kommen Kulturblöcke in Betracht, welche z.B. in Stabform angeliefert werden, aus denen sich die Blöcke abbrechen lassen; solche Blöcke weisen in der Regel ein Pflanzloch auf und dienen sowohl zur Stecklingsvermehrung, wie zur Kultivierung von Einzelpflanzen. Eine weitere Form des Substrates sind sogenannte Multiblöcke, d.h. Formkörper, welche die Blöcke in mehreren Stäben zusammenfassen. Im folgenden wird die Erfindung bevorzugt anhand der beschriebenen Anbauplatten näher erläutert.

Die Erfindung geht von vorbekannten Formkörpern der beschriebenen Art aus. Hierbei bestehen die Anbauplatten aus z. B. Steinwolle. Diese wird aus einem Diabasgestein hergestellt, das bei Temperaturen von über 1.600 Grad C geschmolzen und mit einer speziellen Technik im flüssigen Zustand zu feinen Fasern gesponnen wird, die mit Bindemitteln und Additiven versetzt werden, um die entstehende Steinwolle wassersaugend zu machen. Durch einen Härteprozeß entsteht eine weiterverarbeitbare, formstabile Matte.

Das Substrat derartiger Anbauplatten gibt an sich keine Nährstoffe für den Pflanzenkörper ab, vielmehr werden alle für die Aufzucht erforderlichen Nährstoffe mit dem Bewässerungswasser zugeführt. Solche Kulturen bezwecken eine genaue Kontrolle des Pflanzenwachstums, sie sichern gleichwertige, für die Kultur günstige Verhältnisse, sowie frühe Ernten, günstige Erträge, bessere Qualitäten und Einsparungen von Arbeits- und Energiekosten in Gewächshäusern, wo diese Formkörper ausschließlich verwendet werden. Deswegen muß das Formkörpersubstrat wassersaugende Eigenschaften aufweisen.

Bei der Pflanzenkultur wächst die Pflanze und damit wachsen auch ihre Wurzeln. Die Offenporigkeit des Substrates gewährleistet die Wurzelbildung, wobei das Substrat des Formkörpers von der Pflanze durchwurzelt wird. Diese Durchwurzelung kann auf unterschiedliche Weise eingeleitet werden. Insbesondere geschieht das durch Aufsetzen der beschriebenen Blöcke, die auch aus einem anderen Substrat als das der Anbauplatten bestehen können, auf die Anbauplattenoberfläche.

Derartige Anbauplatten werden vorzugsweise im Gemüsebau, aber auch bei der Kultur von Schnittblumen eingesetzt. Die beschriebene Durchwurzelung und Alterung der Anbauplatten erzwingt jedoch deren regelmäßige Erneuerung in Gewächshäusern. Die verbrauchten und die Pflanzenwurzeln enthaltenden Anbauplatten müssen entsorgt werden. Da infolge der einseitigen Belastung der vorhandenen Mutterböden durch die intensive Bewirtschaftung mit Monokulturen die Fläche der erdelosen Kultur und der Verbrauch an Anbauplatten immer stärker zunimmt, ergeben sich in den Gemüse- und Blumenanbaugebieten enorme Mengen verbrauchter Anbauplatten. Das Material Steinwolle ist praktisch inert und nicht verrottbar. Deshalb kommt zur Abfallbeseitigung aus praktischen Gründen nur die Deponie infrage. Der immer knapper werdende Deponieraum verteuert die Pflanzenkultur auf Anbauplatten aus Steinwolle oder auch aus ähnlichen Werkstoffen erheblich und stellt die Wirtschaftlichkeit der bekannten Ausbauplatten insgesamt infrage.

Der Erfindung liegt die Aufgabe zugrunde, einen Formkörper zu schaffen, dessen Beseitigung mit wesentlich geringeren Schwierigkeiten als bisher möglich ist, wobei jedoch im Vergleich mit den herkömmlichen Substraten auch andere Vorteile erzielt werden.

Diese Aufgabe löst die Erfindung mit den Merkmalen des Patentanspruches 1. Weitere Merkmale der Erfindung sind Gegenstand der Unteransprüche.

Das gemäß der Erfindung zur Hauptsache aus Reiskornschalen und zum geringen Teil aus dem verkittenden Werkstoff bestehende Substrat ist seinerseits im wesentlichen inert. Zwar besitzen die Reiskornschalen einen verhältnismäßig hohen Siliziumgehalt, durch den sie langsam verrottbar sind. Sie verhalten sich aber über längere Zeiträume nicht reaktiv. Die letztere Eigenschaft ist für die Pflanzenkultur von entscheidender Bedeutung, um die allein durch die Nährstoffzuführung mögliche Einstellung der Aufzuchtverhältnisse zu gewährleisten. Der Verkittungswerkstoff ist infolge seines geringen Volumenanteiles für den zur Entsorgung benötigten Deponieraum ohne Bedeutung. Er muß für die Pflanzenaufzucht inert sein, kann aber diese Eigenschaft auch für die Entsorgung beibehalten, ohne daß dadurch Nachteile entstehen. Tatsächlich verrotten die nicht mehr verwendbaren Formkörper trotz der teilweisen Umhüllung der Reiskornschalen mit einem inerten Verkittungswerkstoff im Umfang ihres organischen Anteils vollständig.

Abgesehen von den hierdurch erreichbaren Vorteilen einer entscheidenden Reduzierung des Deponieraums eignen sich die neuen Formkörper auch für andere Arten der Entsorgung, z.B. für die Müllverbrennung, weil sie sich unter entscheidender Volumenminderung veraschen lassen. Daneben werden aber auch noch weitere Vorteile erreicht. Während nämlich bei Formkörpern aus Substraten, welche Steinwolle enthalten oder aus dieser bestehen, häufig ein außerordentlich störender Algen- und Moosbefall beobachtet

2

wird, ist das bei den erfindungsgemäßen Formkörpern nicht der Fall. Eine Reduzierung des außerdem bei den bekannten Substraten auftretenden Pilzbefalles darf in erheblichem Umfang erwartet werden. Endlich läßt sich der tatsächlich bei der Pflanzenkultur verrottende Anteil solcher Formkörper vorteilhaft durch Berechnung in eine Einsparung der Nährstoffzufuhr und in bessere Ergebnisse umwandeln.

Reiskornschalen fallen in erheblichen Mengen bei der Herstellung von vorgekochtem Reis an und stehen daher als Abfallmaterial in großem Umfang zur Verfügung. Es enthält außer den Kornschalen auch die Spelzen des Reiskornes und kaum Spreu. Durch die spezielle Behandlung und Erhitzung der Reisspelzen auf 150 Grad Celsius ist das Material keimfrei und steril. Das Material ist leicht und läßt sich daher problemlos auch über größere Strecken transportieren. Seine geringe Festigkeit erlaubt die Anwendung des unmittelbaren mechanischen Angriffs von Verarbeitungsmaschinen. Sein Zusammenhalt ist andererseits so groß, daß es trotz maschineller Verarbeitung formbeständig ist.

Vorzugsweise besteht der verkittende Werkstoff gemäß den Merkmalen des Anspruches 2 aus einem Polyurethanschaum, weil dieser Werkstoff den Anforderungen an Verarbeitbarkeit und Wirtschaftlichkeit am besten entspricht. Im einzelnen bedeutet die Verwendung eines Prepolymers den Einsatz einer Verbindung, welche aus einem Polyol und aus Polyisocyanat im Überschuß besteht. Dieses Gemisch reagiert ohne nennenswerte Wärmeabgabe bei der Zugabe von Wasser durch Kohlendioxidabspaltung. Das hieraus bestehende Gas führt zur Bildung eines Schaumes, welcher sich trimmen läßt, d.h. u.a. in seiner Porigkeit verändert werden kann. Wegen der geringen Mengen, die zur Verkittung der Reiskornschalen tatsächlich benötigt werden, ist indessen eine Modifizierung des Polyurethanschaums nicht von wesentlicher Bedeutung.

Dieses Ergebnis erhält man insbesondere bei Verwirklichung der Merkmale des Patentanspruches 3. Das Polymer ist eine wasserhelle Flüssigkeit von mittlerer Viskosität, das die Verarbeitbarkeit der Reiskornschalen zu dem Substrat und den daraus hergestellten Formkörper nicht beeinträchtigt, solange die Härtung in einem wesentlichen Maß noch nicht eingesetzt hat. Sie erstarrt nach Wasserzusatz zu einem verformbaren, teilweise transparenten Gebilde, in dem Gasblasen eingeschlossen sind.

Der für die Härtung erforderliche Wasserzusatz braucht nicht genau bemessen zu werden. Denn das nicht zur chemischen Reaktion verwendete Wasser läuft entweder von dem Substrat ab oder befeuchtet den Formkörper. Da die Formkörper in der Regel zentral hergestellt und über kürzere oder längere Strecken zu den Verwendern transportiert werden müssen, empfiehlt sich die Verwirklichung der Merkmale des Anspruches 4, weil hierdurch das Transportgewicht entscheidend herabgesetzt wird.

Der fertige Formkörper läßt die Verkittung rein äußerlich nicht in Erscheinung treten. Er besteht vielmehr für das Auge lediglich aus den aneinander haftenden Reiskornschalen, zwischen denen deutliche Lufträume oder Poren in erheblicher Zahl verbleiben. Bei genauerem Hinsehen erkennt man jedoch die Merkmale des Anspruches 5.

Mit den Merkmalen des Anspruches 6 erhält man einerseits ein Mittel, das es erlaubt, die Porigkeit und damit die Kapillarität des Formkörpers den jeweiligen Bedürfnissen entsprechend einzustellen bzw. zu verändern, weil diese Parameter von der Menge des zugesetzten Torfes abhängen. Dazu muß man bedenken, daß derartige Formkörper häufig in offenen Rinnen untergebracht sind und von oben mit der Nährflüssigkeit betropft werden; Rinnen führen das Nährstoffüberschußwasser ab, so daß Nährstoffwasser sowohl von oben als auch von unten in den Formkörper eindringen kann. Eine andere Einsatzart besteht darin, die Formkörper mit einer Folie zu umhüllen, welche Schlitze aufweist, durch die das Nährstoffüberschußwasser austreten kann, wobei benachbarten Formkörpern Abflußrinnen zugeordnet sind.

Andererseits erhält man durch den im Anspruch 6 vorgesehenen Zusatz von Torf und die im Anspruch 7 vorgesehene Ausführungsform der Erfindung die Möglichkeit, die Menge des Nährstoffbedarfs bereits durch den Inhalt des Formkörpers zu decken. Der pH-Wert (CaCl2) des Torfes liegt bei 5,0-6,0. Beispielsweise kann ein Nährstoffgehalt des Torfes wie folgt eingestellt werden:

| | |
|---|---|
| 100 - 200 mg/l | Stickstoff |
| 120 - 240 mg/l | Phosphat |
| 160 - 260 mg/l | Kali |
| 85 - 120 mg/l | Magnesium |

zuzüglich Spurenelemente, nämlich Eisen, Bor, Mangan, Kupfer, Zink und Molybdän.

Im folgenden wird die Erfindung anhand eines Ausführungsbeispieles näher erläutert, das in der Zeichnung wiedergegeben ist. Es zeigen

Fig. 1 einen erfindungsgemäßen Formkörper in perspektivischer Darstellung,

Fig. 2 schematisch die Darstellung einer Reisschmelze, die als Substrat im Formkörper nach Fig. 1 Verwendung findet,

Fig. 3 eine Einzelheit der Fig. 1 gemäß II und

Fig. 4 eine Einzelheit der Fig. 3 gemäß IV.

Die trocken angelieferten Reiskornschalen (1) kommen aus der Herstellung von vorgekochtem Reis und bestehen aus Körpern, welche die Schalen (4) des Kornes enthalten.

Eine abgemessene Menge wird in einem offenen Mischbehälter mit Hilfe eines angetriebenen Rührflügels mit Wasser versetzt und durchmischt. Die Rühreinrichtung wird während zwei bis drei Minuten betätigt, wodurch eine Oberflächenbefeuchtung der Reiskornschalen in dem Maße erreicht wird, daß aus dem anfangs rieselförmigen Gut eine homogene Masse entsteht, in der die Schalenkörper voll erhalten sind.

Dieser wird eine abgemessene Menge des Prepolymers zugesetzt. Dabei beträgt der Zusatz etwa 30 g/l Reiskornschalengemisch. Eine ebenfalls dosierte Wassermenge wird zugegeben und dabei das Gemisch intensiv gerührt. Nach wenigen Minuten tritt eine Versteifung des Gemisches ein. Der Mischbehälter wird nach Abstellen des Rührers entnommen und in eine Form aus geschüttet, welche dem späteren Formkörper die gewünschten Abmessungen verleiht.

Das in die Form eingegebene Gemisch mit seinem erhärtenden Verkittungswerkstoff wird geglättet und nach wenigen Minuten der Form entnommen. Der so entstandene Formkörper ist je nach Wasserzusatz feucht bis naß, läßt sich aber handhaben, ohne daß die verkitteten Reiskornschalen ihren Zusammenhalt verlieren.

Die hergestellten Formkörper (5) werden in einer gut durchlüfteten Halle gestapelt und an der Luft getrocknet. Nach Abschluß des Trocknungsvorgangs besitzen sie eine Rohdichte von 100-150 g/l und sind leicht. Sie können im unverpackten Zustand und in Stapeln transportiert werden, lassen sich aber auch in Transporteinheiten oder Gebinden zusammenfassen.

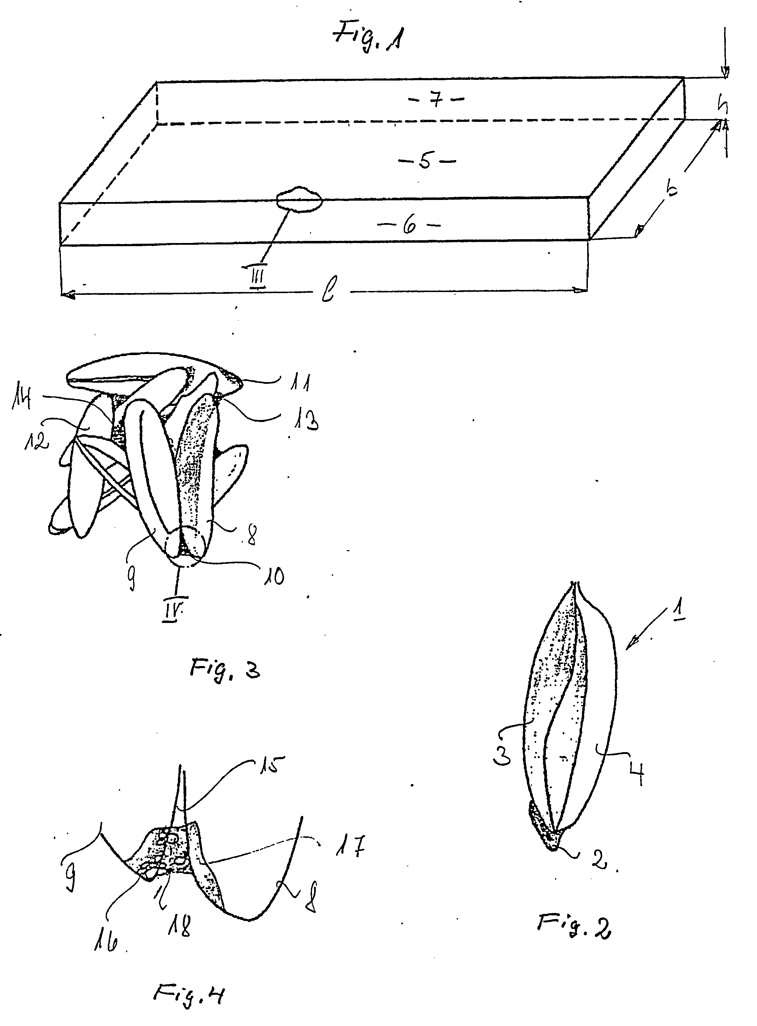

Der in Fig. 1 dargestellte Formkörper hat einen rechteckigen Grundriß und in der Praxis etwa folgende Abmessungen:

| Höhe h | 4 - 8 cm |
| Länge l | 50 - 120 cm |
| Breite b | 10 - 25 cm. |

Derartige Formkörper können mit einer Folie umhüllt werden, was nicht dargestellt ist. Die Folie ist dann wenigstens auf den beiden Längsseiten (6, 7) des Formkörpers (5) mit einem oder mehreren Schlitzen versehen, um überschüssiges Nährstoffwasser abzuführen.

Wie sich aus der Darstellung der Fig. 3 ergibt, ist die Masse der Reiskornschalen (1) nur auf einem Teil ihrer Länge mit einer oder mit mehreren benachbarten Reiskornschalen verbunden. So sind die Reiskornschalen (8, 9) in einem Zwickel (10) untereinander und mit weiteren Reiskornschalen (11, 12) durch weitere Zwickel (13, 14) verkittet. Dadurch entstehen durchgehende Kapillare, wie bei (15) schematisch dargestellt. Aus der Darstellung der Fig.4 ist auch erkennbar, daß die an den Reiskornschalen (8, 9) haftenden Teile (16, 17) des Verkittungsstoffes jeweils durch Stoffbrücken (18) untereinander verbunden sind. Daraus ergibt sich das lockere, jedoch die Reiskornschalen zusammenhaltende Gefüge des Formkörpers (5).

Als Verkittungsstoff wird ein hydrophiles Polyurethanprepolymer verwendet, das ohne genaue Kontrolle des Wasserzusatzes zum Aufschäumen gebracht werden kann.

Formkörper der in Fig. 1 dargestellten Art können folgende Kennwerte aufweisen

| pF-Wert (Wasserspannung) | Feuchtegehalt | H2O Vol.-% | Luft Vol.-% |
|---|---|---|---|
| 0,5 | sehr naß | 33,9 | 59,0 |
| 1,0 | naß | 16,8 | 76,1 |
| 1,5 | normal | 14,2 | 78,7 |
| 2,0 | trocken | 13,4 | 79,5 |

Das Luft-Wasser-Verhältnis kann in den Formkörpern (5) durch eine gesteuerte Bewässerung des die Nährstoffe enthaltenen Wassers kontrolliert und eingestellt werden. Dazu dienen in Gewächshäusern

computergesteuerte Regelautomaten.

### Ansprüche

1. Formkörper für die Pflanzenaufzucht aus einem wassersaugenden Substrat, welches offene Poren für die Pflanzendurchwurzelung aufweist, dadurch gekennzeichnet, daß das Substrat Schalen (1) des Reiskornes aufweist, die mit einer die Schalen (1) wenigstens teilweise umhüllenden polymeren, organischen, jedoch im wesentlichen inerten Substanz (16-18) verkittet sind.

2. Formkörper nach Anspruch 1, dadurch gekennzeichnet, daß die Verkittungssubstanz ein Polyurethanschaum ist.

3. Formkörper nach einem der Ansprüche 1 oder 2, dadurch gekennzeichnet, daß er durch Zugabe von ca. 10 bis 50 g Prepolymer, vorzugsweise etwa 30 g Prepolymer je Liter Reiskornschalen erhältlich ist.

4. Formkörper nach einem oder mehreren der Ansprüche 1 bis 3, dadurch gekennzeichnet, daß die aus einer Wasservorbenetzung der Reiskornschalen und dem Wasserzusatz zu dem Prepolymer bestehende Feuchte bis zu einer Rohdichte von 100-150 g/l des Substrates reduziert ist.

5. Formkörper nach einem oder mehreren der Ansprüche 1 bis 4, dadurch gekennzeichnet, daß die Masse der Reiskornschalen nur auf einem Teil ihrer Länge mit einem oder mehreren Verkittungskörpern verbunden sind, deren an den Reiskornschalen haftende Teile mit Verkittungsbrüchen verbunden sind, die zusammen mit den Reiskornschalen die Begrenzungen bilden.

6. Formkörper nach einem oder mehreren der Ansprüche 1 bis 5, dadurch gekennzeichnet, daß dem aus Reiskornschalen bestehenden Substrat Torf in einer Menge von 0-20 Vol.-% zugesetzt ist.

7. Formkörper nach Anspruch 6, dadurch gekennzeichnet, daß der zugesetzte Torf Hochmoortorf mit einem Zersetzungsgrad nach Post H2-H5 ist, dem für das Wachstum der jeweils aufzuziehenden Pflanzen erforderliche, wasserlösliche Nährstoffe vorher zugesetzt sind.

8. Formkörper nach einem oder mehreren der Ansprüche 1 bis 7, dadurch gekennzeichnet, daß der erhärtete Verkittungswerkstoff hydrophil ausgebildet ist.

9. Verfahren zur Herstellung von Formkörpern nach einem oder mehreren der Ansprüche 1 bis 8, dadurch gekennzeichnet, daß die trockenen Reiskornschalen durch Verrühren mit Wasser vorbenetzt und unter weiterem Verrühren mit dem Prepolymer und dem zum Verschäumen des Prepolymers eingesetzten Überschußwasser vermischt werden, worauf das Gemisch in Formen abgefüllt, eingedrückt und bis zum Aushärten des Polymers gehalten wird.

10. Verfahren nach Anspruch 9, dadurch gekennzeichnet, daß die Formkörper nach Entnahme aus den Formen luftgetrocknet werden.

Fig. 1

Fig. 3

Fig. 4

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | JAPANESE PATENT REPORTS, section M, vol.17, 9 March 1976, Derwent Publications Ltd., London GB. *no. 76-30602X, no. J51027545* & JP-A-51027545 (ISHIHARA INDUSTRIES ET AL) --- | 1-3, 5, 8 | A01G9/10 A01G31/00 |
| A | US-A-4175355 (GRAVI-MECHANICS CO.) * Spalte 9, Zeile 24 - Spalte 11, Zeile 9 * --- | 4, 6, 7, 9, 10 | |
| A | EP-A-18130 (AGRITEC) * Ansprüche 1, 4, 5, 7 * ----- | 1-3 | |

| | | | RECHERCHIERTE SACHGEBIETE (Int. Cl.5 ) |
|---|---|---|---|
| | | | A01G |

Der vorliegende Recherchenbericht wurde für alle Patentansprüche erstellt

| Recherchenort | Abschlußdatum der Recherche | Prüfer |
|---|---|---|
| DEN HAAG | 06 DECEMBER 1989 | MEINDERS H. |

EPO FORM 1503 03.82 (P0403)